# EUROPEAN PATENT APPLICATION

(11) **EP 0 875 398 A2**
(43) Date of publication of application: **04.11.1998**
(21) Application number: 98106870.3
(22) Date of filing: 16.04.1998
(51) Int. Cl.: B44C 1/17, C03C 17/00, C04B 41/45

(54) **Process for the application of various patterns and decorations on glass panes**

(30) Priority: 30.04.1997 IT MI971002
(71) Applicant: V.I.V. International S.p.A., 37030 Cazzano Di Tramigna VR (IT)
(72) Inventor: Fenzi, Giancarlo c/o V.I.V International S.p.A., 37030 Cazzano di Tramigna VR (IT)
(74) Representative: Trupiano, Roberto

(57) **Abstract**

Process for the reproduction of decorations, patterns and the like also variously complex and coloured, on panes from glass, ceramic and like materials, with particularly hard and resistant paints and/or inks.

Said process comprises the steps of movably coupling a conductive metal sheet to the surface of the pane lying behind the one to be decorated; realising a coating of transparent paint on the surface to be decorated by electrostatic painting with powder paints in a painting cabin; performing heat polymerisation of said transparent coating; depositing then on the surface of the so coated glass pane a flexible support bearing the sublimable colour decorations; and lastly submitting said glass pane with the related flexible support to the action of pressure and temperature, to obtain the sublimation of colours and their transfer and fixing on the glass pane

## Description

The present invention relates to a process for carrying out the reproduction of variously coloured and complex decorations and patterns on panes from glass, crystal, ceramic and like materials.

As is known, the present techniques for the reproduction of images and/or patterns, even coloured and complex, on glass panes and the like are based on different systems, among which, in particular, the silk-screen printing technique.

It is also known a technique that realizes the transfer of the decoration borne by a flexible support, for instance paper, with sublimable inks, on a sheet or other artefact by sublimation of the ink utilized for the decorations present in the flexible support; this technique is known by the name of "transfer print", and is utilized to paint and decorate artefacts mainly constituted by metal materials, even not flat and also of great size; it is also used to decorate small articles from ceramic, porcelain and the like.

The silk-screen printing technique utilizes generally paints having a poor resistance, such as liquid paints, and in the case of large size artefacts, it results to be very complex and expensive, with an obvious high incidence on unit cost.

The "transfer" printing technique allows to realize a multi-coloured and complex decoration on artefacts of various type, and also having a non flat surface, by the technique of transfer of a pattern from a flexible support onto the whole surface of said artefact by ink sublimation. As is known, said technique comprises the steps of wrapping the artefact in a support containing the sublimable decoration, usually from paper or fabric or the like; inserting the artefact wrapped in the paper support in a container constituted by two elastically deformable membranes fastened to two substantially rectangular frames hinged with one another; obtaining vacuum in said container to cause the flexible membranes to adhere to the artefact by pressing the support against the artefact surface; and submitting then the whole to oven-heating.

Pressure and heat contribution may also be obtained in an oil-bath oven. In this case, the article to be decorated, suitably wrapped in the decoration transfer support, is immersed in the oil-bath oven, protected by an envelope or bag from elastically deformable, high temperature resistant material. Processes of this type and the related apparatuses, such as for instance those disclosed in FR 2203321 (VILLEROY), EP 544603 (CLAVEAU), EP451067 (CLAVEAU) and EP 606189 (CLAVEAU), allow however to realise the multi-colour or in any case complex decoration only on small-size artefacts, such as for instance cans, spray-bottles, articles from porcelain and the like, but not on glass or crystal panes and the like.

The aforesaid techniques do not allow in any case to use dry powder paints and to realise decorated glass panes, provided with a particularly hard and resistant decoration.

Object of this invention is to provide a process to decorate glass panes and the like with even complex patterns and images, conceived in such a way as to obviate the drawbacks and limitations of the present decoration techniques of panes from glass, ceramic and the like, with obvious practical and economical advantages.

A further object of the invention is to provide a process to decorate glass panes and the like, that can utilise powder paints and to realise a particularly hard and resistant decoration.

Still a further object of the invention is to provide a decorated glass pane, having a decoration substantially free from defects, pattern unevenness and the like, as can be obtained by "transfer" printing techniques.

These and still other objects that will be more apparent in the following, are achieved by a process for the reproduction of a decoration on panes from glass, crystal, ceramic and the like, which process, according to the present invention, comprises the following steps:
- providing a glass pane or the like, with clean and degreased opposite surfaces,
- movably coupling a foil from conductive material, such as steel, aluminium or the like to the surface of the pane lying behind the one to be decorated,
- realizing on the surface to be decorated of said glass pane a coating layer with a transparent powder paint, by means of powder electrostatic painting in a painting cabin, said conductive foil having the function of an electrode or closing conductor of the electrostatic generator circuit,
- performing heat polymerisation of said coating layer, keeping said conductive foil in position,
- applying on said surface of the pane coated with said transparent paint a flexible support bearing the decorations with sublimable inks or colours, and submitting then said support-provided pane to the combined action of heat and pressure, to realize the sublimation and transfer of colours and a stable anchoring of the decorations to the surface of the glass pane, according to the "transfer" decoration technique.

More particularly, said foil or sheet from conductive material is anchored to the behind-lying surface of the glass pane to be decorated by means capable of peripherally crimping the sheet to the edges of the glass pane.

Besides, heat polymerisation of said layer of transparent paint is realised at a temperature comprised between 180°C and 250°C.

Besides, said transparent paint is constituted by a hard and resistant powder selected from among polyester, polyurethane powders and the like.

Still besides, said metal foil constituting an electrode of the powder painting circuit is provided with through-holes obtained on all or a part of its extension, said holes being capable of constituting means for vacuum creation between a coating sealing sheath or membrane and the glass pane coated with the flexible transfer support, so as to cause the support to uniformly adhere to the surface of the glass pane, to realize the transfer of the colours according to the "transfer" technique.

In other words, said metal foil provided with holes may constitute the perforated plane through which vacuum is created to realize the transfer, for instance according to what is disclosed in the patent application PCT/EP96/00656 by the same applicant.

According to a variant of the present invention, before realizing said coating layer with a transparent powder paint, an "adhesion promoter" is applied on the surface to be decorated, which promoter is suitable to improve the adhesion of the powder on the glass surface. For instance, the promoter known by the trade name "Primer name "Primer PIO", produced and sold by the company AKZO NOBEL Coatings SpA, viale Matteotti, 39-22012 Cernobbio (CO) ITALIA, is advantageously used.

Further characteristics and advantages of the present invention will be more clearly stressed by the following detailed description, made with reference to the attached drawings, solely reported by way of non limiting indication, and wherein:
Figure 1 shows a schematic cross-section view of an apparatus for the realization of the process of the present invention,
Figure 2 shows also a cross-section view of another embodiment of the apparatus of Figure 1.

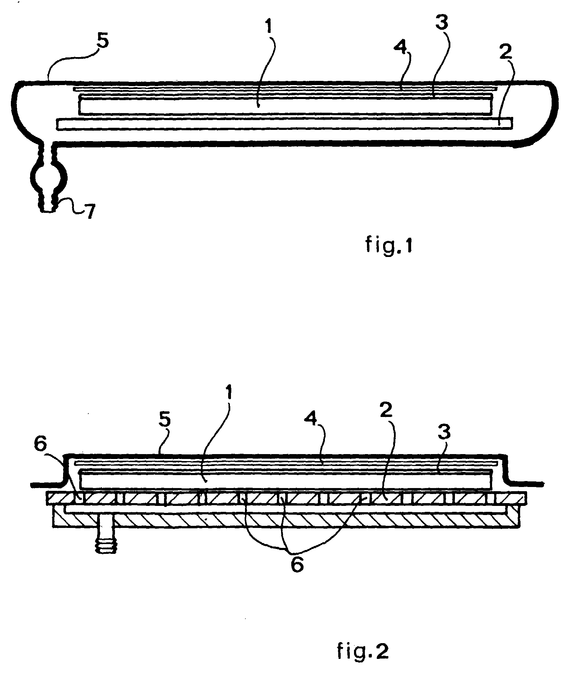

With reference to said figures, and in particular to Figure 1, the process of the present invention is purposive to the reproduction of variously coloured and also complex patterns and decorations on flat surfaces from glass, crystal, ceramic, marble and all those materials that are electrically insulating and that therefore cannot receive surface paintings by the usual technique of electrostatic powder painting.

The glass panes (or the like) to be decorated according to the present invention may have a variable thickness according to the needs, and different geometrical shapes, such as round, oval, quadrangular, triangular forms, and the like.

The process of colour reproduction on glass pane comprises, with reference to Figure 1, the steps of providing a glass pane 1 of quadrangular form and constant thickness; cleaning and/or degreasing both surfaces; and movably applying on the surface lying behind the one to be decorated, a metal foil or sheet 2 of a size equal to or greater than that of pane 1. The anchoring of the metal foil is obtained, for instance, by means of grippers or clamps (not represented) peripherally arranged relatively to glass pane and foil 2, so as to allow the quick and easy removal of metal foil 2 at the end of the process and whenever required. After this anchoring of the metal foil, on the surface of the same glass pane 1, opposite to the one anchored to the foil, a coating 3 of transparent powder paint - usually hard and resistant resin powders, such as polyurethane, polyester resins and the like - is performed.

Said coating 3 is performed, according to the invention, by the technique of electrostatic painting, carried out in a painting cabin, by means of a gun, a rotary disk and the like.

As the glass pane whose surface is to be painted is constituted by an electrically insulating material, in order to render the electrostatic painting feasible, said metal foil 2 is utilized as an electrode capable of closing the circuit of the electrostatic generator, which circuit has in this case the negative pole connected to the rotary disk (or the gun device) and the positive pole connected to said metal foil 2, suitably earthen.

In this way, the transparent powder paint is electrostatically charged and therefore attracted against the surface of the glass pane, forming on the same a transparent and uniform coating.

Glass pane 1 with the surface coated with the transparent painting powders, always associated to metal foil 2 and live, is submitted to a heat treatment, at a temperature comprised between 180°C and 240°C, according to the type of powder utilised, by introduction in a firing oven or exposure to direct radiation by infrared radiation lamps.

The heat treatment causes the polymerisation of the base resin of the paint and therefore the hardening and adhesion of the same to the surface of the glass pane, forming thereby a hard resistant layer 3 of transparent paint.

At the end of the heat treatment, on the painted surface of the glass pane a flexible transfer support 4 is laid which bears the decoration desired; in substance, the flexible support is a paper sheet with decorations, even complex, realised, as is known, with sublimable colours.

The transfer of the decoration to the layer of transparent paint present on the face of the glass pane is then obtained by the technique known as "transfer printing", for instance according to the teaching of the already mentioned patent application PCT/EP96/00656: first of all, the pane and the related flexible support are enveloped in a sheath 5 from flexible material, such as rubber or the like, wherein vacuum is obtained through duct 7 to allow the sheath to adhere to the surface to be decorated by exercising a uniform pressure on the flexible foil 4, with the decorations against the surface to be decorated, then the pane and the related flexible support comprised in the rubber sheath are submitted to the action of heat (in a tunnel chamber or oven) for a time sufficient to allow the transfer of the decorations from the support to the layer of transparent paint that coats the surface of the glass pane to be decorated, and their polymerisation.

The above described process permits to utilize transparent powder paints of high hardness and resistance and to employ the electrostatic painting technique, thanks to the use of said metal foil; besides, it permits to paint the glass pane in the painting cabin also in a vertical position, with obvious practical and economic advantages.

Besides, always according to the invention, said metal foil 2 may be provided with through-holes 6 (Fig. 2), through which vacuum can be obtained to cause the flexible support 4 with the decorations to adhere to the painted surface of the glass pane.

According to the invention, it is also possible to cause the adhesion of the flexible foil to the glass pane by submitting said flexible support and the related pane to a pressure - instead of a depression within the flexible sheath - exercised by any known means, on flat rigid element put in touch with the opposite surfaces of the complex constituted by the flexible foil and the glass pane.

The glass panes according to the invention may be employed in various functional and/or ornamental applications. Besides, such glass panes may be also employed by coating and therefore protecting the decorated face with a second transparent pane from glass, from methacrylate or the like. Moreover, the decorated glass pane may be employed to realize composite articles, compound-glasses and the like.

Obviously, in the practice, structurally and functionally equivalent modifications can be introduced in the invention as described above and illustrated in the figures without departing from the protection scope of said invention.

## Claims

1. A process for the reproduction of even variously coloured decorations on panes from glass, crystal, ceramic and like material, characterised in that it comprises the following steps:
- providing a pane from glass or the like, with the opposite surfaces cleaned and degreased,
- movably coupling a foil from conductive material, such as steel, aluminium or the like to the surface of the pane lying behind the one to be decorated,
- realizing on the surface to be decorated of said glass pane a coating layer with a transparent powder paint, by means of electrostatic powder painting in a painting cabin, said conductive foil having the function of an electrode or closing conductor of the electrostatic generator circuit,
- performing heat polymerisation of said coating layer, keeping said conductive foil in position,
- applying on said surface of the pane coated with said transparent paint a flexible support bearing the decorations with sublimable inks or colours, and submitting then said support-provided pane to the combined action of heat and pressure, to realize the sublimation and transfer of colours and a stable anchoring of the decorations to the surface of the glass pane, according to the " transfer" decoration technique.

2. The process according to claim 1, characterised in that, before realising said coating layer with a transparent powder paint, an "adhesion promoter" is applied on said surface to be decorated.

3. The process according to claim 2, characterised in that said adhesion promoter is "Primer PIO", produced and sold by the company AKZO NOBEL Coatings SpA, viale Matteotti, 39-22012 Cernobbio (CO) ITALIA.

4. The process according to claim 1, characterised in that said foil (2) from conductive material is movably anchored to the behind-lying surface of the glass pane (1) to be decorated by means capable of peripherally crimping foil (2) to the edges of the glass pane.

5. The process according to claim 1, characterised in that the polymerisation and fixing of said layer (3) of transparent powder paint on the surface of the glass pane to be decorated is performed at a temperature comprised between 180° and 250°C.

6. The process according to claim 1, characterised in that said transparent powder paint forming the coating (3) of the surface to be decorated is constituted by a hard and resistant powder, selected among polyuretane, polyester powders and the like.

7. The process according to claim 1, characterised in that said metal foil (2) is provided with through-holes (6) suitable to constitute means for vacuum creation between an airproof coating sealing membrane (5) and the glass pane (1) provided with a layer of transparent paint (3) and coated with the flexible transfer support (4), so as to cause the support to uniformly adhere to the transparent paint layer, to realise the transfer of the colours according to the "transfer" technique.

8. The process according to the preceding claims, characterised in that it is realised for the above specified purposes and utilisations according to what has been described and illustrated.
